(19)

**Europäisches Patentamt**
**European Patent Office**
**Office européen des brevets**

(11)  **EP 4 786 436 A1**

(12)  # EUROPEAN PATENT APPLICATION

(43) Date of publication:
**05.08.2026  Bulletin 2026/32**

(21) Application number: **25155350.9**

(22) Date of filing: **31.01.2025**

(51) International Patent Classification (IPC):
**C04B 14/10** (2006.01)      **C04B 26/04** (2006.01)
**C04B 14/26** (2006.01)      **C04B 14/28** (2006.01)
**C04B 24/38** (2006.01)      C04B 103/67 (2006.01)

(52) Cooperative Patent Classification (CPC):
(C-Sets available)
**C04B 40/0039; C04B 26/04;** C04B 14/10;
C04B 2111/0012; C04B 2111/00681; C04B 2201/10
(Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Saint-Gobain Placo**
**92400 Courbevoie (FR)**

(72) Inventors:
• **ZAMDAR, Kardo**
**191 62 SOLLENTUNA (SE)**
• **CEDERHAMMAR, Magnus**
**191 62 SOLLENTUNA (SE)**

(74) Representative: **Saint-Gobain Recherche**
**41 Quai Lucien Lefranc**
**93300 Aubervilliers (FR)**

(54)  **PREMIX COMPOSITION FOR FINISHING COMPOUNDS AND METHOD OF PREPARATION**

(57)    The present invention relates to a premix composition, for preparation of finishing compound, the premix composition comprising:
- a binder,
- preferably an additive,
- a polysaccharide,
- a clay, and
- water

wherein the mass ratio of clay to polysaccharide is at least 0.9, preferably at least 1.

The present invention also relates to a method for manufacturing the premix composition according to the invention and to a finishing compound comprising the premix composition according to the invention and at least one filler.

[Fig. 1]

**(Cont. next page)**

(52) Cooperative Patent Classification (CPC): (Cont.)

C-Sets
**C04B 26/04, C04B 14/10, C04B 14/26,
C04B 14/28, C04B 14/185, C04B 24/38,
C04B 40/0046, C04B 2103/67, C04B 2103/408;
C04B 26/04, C04B 14/10, C04B 14/26,
C04B 14/28, C04B 14/185, C04B 24/383,
C04B 2103/67, C04B 2103/408;
C04B 40/0039, C04B 14/10, C04B 24/38,
C04B 26/04, C04B 40/0046, C04B 2103/67,
C04B 2103/408;
C04B 40/0039, C04B 14/10, C04B 24/383,
C04B 26/04, C04B 2103/67, C04B 2103/408;**
C04B 14/10, C04B 20/023

**Description**

**Technical field**

The invention relates to a pre-mix composition useful in the production of finishing compounds for substrates and wallboard panels in the field of construction and renovation of buildings. The invention also relates to a method of manufacturing such a pre-mix and the use of the pre-mix for producing a finishing compound, such as a joint compound or a smoothing plaster.

**Background**

In the construction of walls and/or ceilings, wallboard panels, generally made from gypsum, are attached to a supporting frame (e.g. wood studs or metal framing). Finishing compounds, such as joint compounds or smoothing plaster, are adhesive compositions used to seal and smooth the joints between adjacent panels, to hide the fixings (screws or nails used to secure the panels to the frame), to prepare and finish substrates before applying a coating or paint, and/or to obtain a uniform finish. These compounds are typically applied in multiple layers, often combined with reinforcing tape, to create a monolithic, finished surface ready for decoration: a first coating is generally intended to fill the space between adjacent wallboards and subsequent coatings are applied to obtain a smooth finish. Each applied layer of finishing compound must be allowed to dry or set before applying the next coating and may be lightly sanded.

There are different types of finishing compounds:

- drying-type finishing compounds harden through the evaporation of water contained in the mixture: they may be available in dry powder form (to which an amount of water is added at the work site before application) or in a ready-to-use form, i.e. in a wetted paste form (with no or little addition of water on-site, depending on the application and the desired consistency);
- setting-type finishing compounds harden through a chemical reaction with water, typically using calcium sulfate hemihydrate (stucco) as reactive filler (or "mineral binder"), which reacts with water to form an interlocking matrix of calcium sulfate dihydrate crystals: they are supplied in dry powder form and are mixed with water for direct use on-site;
- some other finishing compounds combine the setting action of a calcium sulfate hemihydrate based compound with a ready mixed compound.

Drying-type finishing compounds, in particular in wetted paste form, have the advantage of being very easy to handle and apply, but the drying time may sometimes be longer, depending on the environmental conditions. Setting-type finishing compounds are sometimes preferred as they lead to less shrinkage, are more resistant to cracking, and have generally quicker finishing times (setting time), but they present a limited working time once mixed and are often harder to sand to a smooth finish.

Wetted finishing compounds generally contain an organic binder, a thickened system, a charge or an inert filler, water and various additives such as biocides, suspending agents, lubricant or stabilizers. Their formulation may impact their rheological properties (consistency, viscosity, stickiness, workability, etc.), their processing use (shear demand for homogenization, pumpability, transport, storage), but also their setting or drying characteristics (finishing time, shrinkage, cracking, etc.). Such compositions must also be stable over time to avoid sedimentation phenomena or changes in viscosity over time which can negatively impact their properties and quality in application.

In addition, a multitude of products exist to meet the needs of different possible ways of application (for example by knife, roller, spray or patterned/textured application tools) and goals (heavy, semi-light or light compounds), which requires also adapting the rheological properties of the joint compound or of the smoothing plaster and its load rate of charges.

WO2005028585 discloses a joint compound composition comprising reduced amounts of clay in order to limit the problems of viscosity stability and of cracking. However, such compositions remain insufficiently stable with aging.

WO2002/094734 discloses a pre-blend for preparing a joint compound comprising a cellulose ether thickener. However, it requires both large amounts of salts for proper dispersion and of diethylene glycol as humectant. High contents of humectant give rise to high moisture retention and thus not only increase the drying time (which delay finishing processes and which may be undesirable in fast-paced construction environment) but also increase shrinkage upon drying (which might result in cracks or in the need for additional applications of the joint compound to achieve a smooth surface). Furthermore, high levels of salt may impact the rheology (flow properties) of the final compound, which might either improve or hinder the application process. For instance, some salts can increase viscosity, making the mixture harder to spread evenly.

Finishing compound formulation is still the subject of research and addresses various challenges, including ease of use and performance improvements further to cost-efficiency and environmental considerations. Furthermore, pre-mix with enhanced stability are required for the production of a wide range of finishing compounds which may be adaptable whatever the desired application and in the same time which combine ease of processability, ease of use and high performances, such as optimum finishing time and reduced shrinkage. Thus, there is still a need to provide pre-mix for the production of finishing compounds, the pre-mix and the resulting finishing compound both meeting the overall desired criteria.

## Summary of the invention

After extensive research, the inventors have surprisingly discovered that a premix composition comprising particular ratio of clay and polysaccharide can be prepared in an easy and simple process with high homogeneity, high viscoelasticity and very high stability with aging. Indeed, without being bound by any particular theory, it is believed that the inter-relationships between particular proportions of clay and of polysaccharide result in a structured suspension with enhanced stability and rheological properties. Furthermore, the inventors have surprisingly discovered that such a premix makes it possible to provide a finishing compound combining the advantages of the drying-type finishing compounds (in particular in terms of ease of handling, workability, application and sanding) with those of the setting-type finishing compounds (in particular in terms of limited shrinkage and overall drying time or finishing time). The premix according to the invention may be used as a basic composition for the easy preparation, for example in advance or on site, of a wide variety of finishing compounds, including joint compositions and smoothing plasters, allowing easy adaptation of the load and adjustable open time to suit different applications. The present invention therefore has the advantage of providing a stable all-in-one product for the preparation of a variety of finishing compounds and for applications as varied as spatula, roller or aerosol.

Hence, according to a first aspect, the present invention relates to a premix composition, for preparation of finishing compound, the premix composition comprising:

- a binder,
- optional additives,
- a polysaccharide, preferably a modified polysaccharide,
- a clay, and
- water

wherein the mass ratio of clay to polysaccharide is at least 0.9, preferably at least 1.

The present invention also relates, according to a second aspect, to a finishing compound comprising the premix composition according to the invention and at least one filler.

A third object of the present invention is a method for preparing a premix composition, said method comprising:

- providing at least one binder and mixing with optional additives to obtain an binder composition (A);
- preparing a pre-gel of clay (B) comprising water and clay;
- preparing a pre-gel (C) comprising water and polysaccharide, preferably modified;
- mixing the pre-gel of clay (B) with the pre-gel (C) to obtain a mixture (BC); and
- mixing the binder composition (A) with the mixture (BC).

According to a fourth aspect, the present invention also relates to the use of a premix composition according to the invention for preparing a finishing compound, such as a joint compound or a smoothing plaster.

A further object of the present invention is a method for preparing a finishing compound, said method comprising:

- providing a premix composition (P) according to the invention;
- mixing said premix (P) with added water to obtain a diluted premix (E); and
- adding at least one filler to the diluted premix (E) and mixing to obtain the finishing compound (J).

## Brief description of the drawings

Fig. 1 represents a schematic view of a method according to the invention for manufacturing a premix composition.
Fig. 2 represents a schematic view of a method for preparing a finishing compound from a premix composition according to the invention.
Fig. 3 represents the viscosity curve of a joint compound according to the invention compared to a reference joint compound.

## Detailed description

In this disclosure, the term "premix" refers to an intermediate mixture (i.e. containing ready-mixed components) intended to be blended with at least one filler in order to get a finishing compound, in particular a joint compound or a smoothing product. Thus, the premix composition as such cannot be used as a finishing compound (does not comprise sufficient filler in order to fill and coat joints or substrates). For example, the premix composition may comprise less than 20% by mass of filler, preferably less than 10% by mass, and more preferably less than 5% by mass of filler, compared to the total mass of the premix composition. As the premix composition contains water. Therefore, unless otherwise stated, the given % of ingredients that relate to the "premix composition" are percentages by weight relative to the total weight of the premix composition (i.e. not relative to the dry weight of the composition).

In this disclosure, the term "finishing compound" refers to a composition comprising substantial amounts of filler(s), intended to be coated, in a wetted (fluid or pasty) form, onto a substrate (e.g. a wallboard), and able to dry and/or set such as to form a hardened coating. The finishing compound may for example be used for the preparation and finishing of said substrate, in particular before applying another coating or paint on it. The finishing compound as such contains substantial amounts of filler. The finishing compound may for example comprise at least 45% by mass of filler, preferably at least 50% by mass, and more preferably at least 60% by mass of filler, compared to the total mass of the finishing compound. Examples of finishing compounds include joint compounds (i.e. compositions more particularly dedicated to fill holes or empty spaces) and smoothing plaster (i.e. compositions more particularly dedicated to provide a smooth and uniform finish). The finishing compound according to the invention contains fillers and the premix according to the invention (which contains water). Thus, it is provided to the users in a wetted form, for example as a cream, a paste or a soft solid. Therefore, unless otherwise stated, the given % of ingredients that relate to the "finishing compound" are percentages by weight relative to the total weight of the finishing compound (i.e. not relative to the dry weight of the composition).

In this disclosure, the term "filler" refers to a pulverulent material, added to a composition such as to give body to said composition. A filler may refer to an inert filler (i.e. that do not chemically react with the medium of the composition to which it is added, and in particular that do not react with water) or to a reactive filler, also called here "mineral binder" (i.e. that chemically react with the medium of the composition, and in particular with water, such as for example calcium sulfate hemihydrate, calcium sulfate, cement). The finishing compound according to the invention may comprise one or more inert fillers, in particular other than the clay contained in the premix composition. Non-limiting examples of inert fillers include calcium carbonate, limestone (which is composed primarily of calcium carbonate or calcite), dolomite (mainly composed of calcium magnesium carbonate), dolomitic limestone, mica, talc, expanded perlite, calcium oxide, glass microspheres, pyrophyllite, diatomaceous earth, vermiculite, fibrous material and/or calcium sulfate dihydrate.

## Premix composition:

A first object of the present invention is a premix composition as defined in claim 1. Such a premix composition is particularly advantageous for preparing a wide variety of finishing compounds while maintaining or even improving their quality and performance, such as high viscoelasticity, enhanced drying time and reduced shrinkage upon drying.

In the premix composition according to the invention, the mass ratio of clay to polysaccharide, preferably modified, is of at least 0.9, preferably at least 1, more preferably at least 1.2, even more preferably at least 1.5. For example, the mass ratio of clay to polysaccharide, preferably modified, may be from 0.9 to 5, preferably from 1 to 4, more preferably from 1.2 to 3.

The premix composition according to the invention is preferably a gel-like composition, preferably a hydrogel. In other words, the mixture is in a gel form, i.e., the mixture contains solid particles densely suspended in a liquid part such as to form a tridimensional network, which may be the result of physical or chemical bonds. The gel-like composition may therefore exhibit solid behavior when at rest (e.g. firmness, elasticity).

Surprisingly, such a premix composition showed advantages in terms of stability, of viscosity and of viscoelastic properties which furthermore facilitate the preparation of finishing compounds with an easy and uniform dispersion of the fillers, and lead to finishing compounds of high quality and performance (workability, drying time, reduced shrinkage, etc.). Preferably, the premix composition according to the invention is viscoelastic. In other words, the premix composition exhibits both viscous and elastic characteristics, when it undergoes deformation. Preferably, the premix composition according to the invention is shear-thinning. In other words, the viscosity of the premix composition decreases with shear rate.

The premix composition according to the invention includes one or more binders, preferably at least one organic binder.

As used herein, "binder" means any component able to provide bond strength and adhesion of the finishing compound to hold it on a substrate (e.g., wallboard) or to hold solid particles and other components of the finishing compound together after drying. Any conventional organic binder that is used in finishing compounds is considered appropriate for the present premix composition. Non limiting examples of organic binders that are suitable include vinyl polymers (such as for example polyvinyl acetates, acrylates, polyvinyl alcohols, ethylene vinyl acetates, polyacrylamides, acrylate or acrylamide copolymers, styrene copolymers, etc.), latex copolymers, starches and caseins. Depending on the application, one or more binders, in particular organic binders, may be used in an amount from about 0.1% to about 10% by mass, based on the mass of the finishing compound.

Preferably, the mass content of binder, preferably of organic binder, in the premix composition according to the invention is more than 4% by mass , for example from 4,5% to 50% by mass, based on the mass of the premix composition. For example, the premix composition may comprise at least 7% by mass, preferably at least 10% by mass of binder, preferably of organic binder, based on the mass of the premix composition. It allows to improve the adhesion of the finishing compound to the substrate and its flexural strength. The premix composition may comprise from 7% to 40% by mass, preferably from 10% to 30% by mass of binder, in particular of organic binder, based on the mass of the premix composition. Such contents make it possible to optimize the adhesive properties without negatively impacting the quality of the finishing compound (shrinkage, surface hardness).

The premix composition according to the invention includes one or more polysaccharide, preferably a modified polysaccharide.

The polysaccharide may be modified in order to improve its properties, such as its ability to thicken, its solubility or dispersibility in water without requiring heating, and/or its adhesive properties. The polysaccharide may for example be chemically modified (e.g. etherification, acetylation, carboxymethylation), enzymatically modified or physically modified (e.g. pre-gelatinization). The polysaccharide is preferably chemically modified, more particularly acetylated, etherified and/or carboxymethylated. The polysaccharide, preferably modified, may be a hydrophilic gelling agent. In this disclosure, "hydrophilic gelling agent" refers to a component which is compatible with an aqueous medium and which is capable of thickening or increasing the viscosity of the aqueous medium. The polysaccharide, preferably modified, is preferably water-soluble or water dispersible at temperatures below 40°C, for example from 10°C to 40°C, preferably at ambient temperature (i.e. around 20°C). The polysaccharide, preferably modified, may be non ionic. Suitable polysaccharides include but are not limited to modified celluloses, preferably acetylated, etherified and/or carboxymethylated; modified starches, preferably pre-gelatinized; gums, such as guar or xanthan gums.

Preferably, the polysaccharide is a modified cellulose, for example an acetylated, an etherified and/or a carboxymethylated cellulose. Modified celluloses show particular advantages in terms of rheological and stability properties in the premix according to the invention. Non limiting examples of modified cellulose that are suitable include ethyl hydroxyethyl cellulose (EHEC), hydroxyethyl cellulose (HEC), methyl cellulose, methyl hydroxypropyl cellulose ("MHPC", also called hydroxypropylmethylcellulose "HPMC" or hydroxymethylpropylcellulose "HMPC"), methyl hydroxyethyl cellulose ("MHEC", or hydroxyethylmethylcellulose "HEMC"), methyl ethyl hydroxyethyl cellulose and/or carboxymethylcellulose. The modified cellulose may have a molecular weight between about 1000 and 500,000 daltons. The modified cellulose may have a viscosity at 20°C, pH 7 at 1% solution, of from about 3 000 to 9 000 mPa.s, preferably of from about 5 000 to 6 500 mPa.s (Brookfield LV).

More preferably, the polysaccharide is a cellulose ether. As used herein, a "cellulose ether" is a polymer derived from cellulose, modified by the etherification of hydroxyl groups (-OH) by alkyl (-R) or hydroxyalkyl (-R(OH)) groups. The alkyl chain of the etherified group(s) may be linear or branched, and preferably comprises from 1 to 6 carbon atoms, preferably from 1 to 3 carbon atoms. Preferably, the cellulose ether is selected from hydroxyalkyl cellulose ethers, such as for example methyl ethyl hydroxyethyl cellulose or methyl hydroxypropyl cellulose. Examples of commercially available cellulose ether include products sold under the names Methocel® (from The Dow Chemical Company, for example Methocel 240S), SLEO® MHEC (from SLEO Chemicals), or Natrosol 250 HXR (from Ashland).

Preferably, the mass content of polysaccharide in the premix composition is at most 10%, more preferably at most 8%, more preferably at most 5%, by mass based on the total mass of the premix composition. For example, the mass content of polysaccharide in the premix composition may be from 0.2% to 10%, preferably from 0.5% to 8%, more preferably from 0.5 to 5%, by mass based on the total mass of the premix composition. It allows to optimize the stability of the premix while reducing the risk of over-thickening or over-gelation during storage. It is to be noted that the present invention allows to use lower levels of thickeners in the resulting finishing compound than in known compositions. For example, the mass content of polysaccharide in the finishing compound may be at most 1%, preferably at most 0.8% by mass, more preferably at most 0.5% by mass, based on the total mass of the finishing compound. It allows to minimize shrinkage and to get reasonable drying time. For example, the mass content of polysaccharide in the finishing compound may be from 0.01% to 1%, preferably from 0.02 to 0.8%, more preferably from 0.05% to 0.5% by mass, based on the total mass of the finishing compound.

The premix composition according to the invention includes at least one clay.

Without intending to be bound by any particular theory, it is believed that the clay contributes, together with the polysaccharide, to the particularly stable and jellified structure of the premix of the invention resulting from physical and chemical bonds (such as electrostatic interactions, hydrogen bonds, interactions with deployed cellulose chains, etc.). As used herein, "clay" is understood as a pulverulent material predominantly comprising at least one clay mineral, i.e. at least one hydrated aluminosilicate, preferably of the phyllosilicate family. Examples of such clay minerals are kaolinite, smectites (in particular montmorillonite, saponite or beidellite), illite, sepiolite, attapulgite (also known as palygorskite), hectorite and laponite. Because of the very large specific surface area of their structure, clays are capable of allowing large numbers of cation or anion exchanges and/or polar molecules, such as water, to penetrate into intersheet spaces, which generally results in a swelling of the overall material. Non limiting examples of suitable clays for use in the premix composition include attapulgites, sepiolites, bentonites, laponites, nontronites, beidellites, yakhontovites, zincsilites, volkonskoites, hectorites, saponites, ferrosaponites, sauconites, swinefordites, pimelites, sobockites, stevensites, svinfordites, vermiculites, water-swellable synthetic clays, smectites, e.g., montmorillonites, particularly sodium montmorillonite, magnesium montmorillonite, and calcium montmorillonite, illites, mixed layered illite/smectite minerals such as rectorites, tarosovites, and ledikites, magnesium aluminum silicates, and mixtures thereof. The clay may have a bulk density of from about 400 to 900 $kg/m^3$, preferably from 500 to 700 $kg/m^3$. The amount of clay in the finishing compound may for example be from about 0.05% to about 3% by mass relative to the total mass of the finishing compound. Examples of such clay are sold under the name VEEGUM R (magnesium aluminum silicate, from Vanderbilt Minerals LLC) or under the name Laponite RD (synthetic layered silicate, from BYK).

Preferably, the clay is selected from phyllosilicates, more preferably from activated phyllosilicates, even more preferably from natural origin.

As used herein, an "activated" clay refer to minerals that have been treated or modified to improve some of their physicochemical properties. For example, they may be chemically activated (e.g. by acidification, by cation exchange, etc.) and/or mechanically activated (e.g. by grinding so as to increase the specific area).

Preferably, the clay is selected from activated clays, preferably by cation exchange. More preferably, the clay is selected from alkali-activated clays.

Preferably, the clay has a pH of at least 8, more preferably of at least 9, in particular at a temperature around 20°C. It allows to facilitate the formation of the structured premix and to participate to its stability. For example, the clay may have a pH of from 8 to 12, preferably of from 9 to 11, in particular at a temperature around 20°C. The pH may for example be measured using a suspension of clay in water (for example at around 2% by mass).

Preferably, the mass content of clay in the premix composition is at most 15%, more preferably at most 10%, more preferably at most 7%, even more preferably at most 5% by mass, based on the total mass of the premix composition. For example, the mass content of clay in the premix composition may be from 0.3% to 10%, preferably from 0.5% to 7%, more preferably from 0.7% to 5%, by mass based on the total mass of the premix composition. It allows to optimize the storage stability of the premix and of the finishing compound, with stable viscosity and ease of smoothing, while reducing the risk of over-thickening during storage.

The mass content of water in the premix composition may be from 30% to 90% by mass, preferably from 40% to 85% by mass, based on the mass of the premix composition.

The premix according to the invention, may preferably comprise one or more additives. As used herein, "additive" refers to additional ingredients other than the components cited above. Indeed, optional additives may be used in the premix according to the invention, for example for enhancing rheological properties, for improving the shelf life or for bringing some chemical or physical properties to the premix composition and/or to the resulting finishing compound. Non limiting examples of additives include preservatives, wetting agents, antimicrobials, bactericides, fungicides, pH modifiers (such as for example citric acid, alkali hydroxides, such as NaOH, etc.), defoamers, plasticizers, additional rheology modifiers, dispersing agents, set accelerators, set retarders, setting-reaction indicators, coloring agents, surfactants and/or humectants. Additives, if present, may be used in amounts generally ranging from about 0.05% to about 1% by mass, based on the total mass of the finishing compound.

Preferably, the premix composition comprises at least one additive including a preservative, an antimicrobial, a bactericide, a fungicide, or any combination thereof.

Preferably, the premix composition comprises at least one additive including a defoamer, a plasticizer, or any combination thereof.

The premix composition may comprise a humectant. Preferably, the premix composition comprises less than 8% by mass of humectant (i.e. from 0% to less than 8% by mass), preferably less than 6% by mass, more preferably less than 4% by mass of humectant, based on the total mass of the premix composition. It allows to optimize the overall performances of the finishing compound (including optimum drying time and reduced shrinkage). As used herein, a "humectant" is an additional compound able to absorb or to retain moisture. Non limiting examples of humectants are glycols, such as for example diethylene glycol.

The premix composition may comprise an alkali hydroxide. Surprisingly, it allows to optimize the stability and the rheological properties of the premix composition. Non limiting examples of alkali hydroxides include NaOH, LiOH or KOH. The total mass content of alkali hydroxide in the premix composition may be from 0% to 0.5% by mass, for example from 0.01% to 0.2% by mass, based on the total mass of the premix composition.

The premix composition may comprise an alkali metal salt other than alkali hydroxides. Preferably, the premix composition according to the invention comprises less than 5% by mass of alkali metal salt other than hydroxides (i.e. from 0% to less than 5% by mass), preferably less than 3% by mass, more preferably less than 1% by mass, based on the total mass of the premix composition. It allows a better control of the rheological properties of the premix composition and/or of the resulting finishing compound. As used herein, "alkali metal salt" means inorganic compounds that include an alkali metal and that dissociate in water to form ions. Non limiting examples of alkali metal salts other than hydroxides include potassium carbonate, potassium sulfate, sodium acetate, etc.

Preferably, the total mass content of additives in the premix composition is at most 15% by mass, preferably at most 12% by mass, more preferably at most 10% by mass, based on the total mass of the premix composition. It allows to combine high stabilization of the premix composition and optimized performances of the resulting finishing compound.

Preferably, the sum of the amounts of binder, preferably of organic binder, of polysaccharide, of clay and of water represents at least 85% by mass, preferably at least 87% by mass, more preferably at least 90% by mass, based on the total mass of the premix composition.

Preferably, the premix composition according to the invention has a density of 0.8 to 1.2 kg/L, preferably of 0.9 to 1.1 kg/L.

Preferably, the premix composition according to the invention has a viscosity, at 20°C and atmospheric pressure ($1.013 \times 10^5$ Pa), of from 50 000 to 150 000 cP, preferably from 65 000 to 120 000 cP, said viscosity being preferably measured within 24 hours after manufacturing. As used herein, the viscosity is measured using a Brookfield DV1 viscometer (Brookfield AMETEK, Brookfield Engineering), at an ambient temperature of approximately 20°C. This device measures the torque required to rotate, at a given speed "v", a spindle "M" of a given size (selected according to the manufacturer's standard operating recommendations), immersed in the fluid composition to be tested. Here the viscosity is measured with spindle no. 7 at a speed of 12 rpm (rotations per minute). The measurements are expressed in cP (centipoise or Pa.s).

Preferably, the premix composition according to the invention has a pH of from 5 to 7, preferably from 5.5 to 6.5.

Preferably, the premix composition according to the invention has a dry content of from 8% to 40% by mass, more preferably from 10% to 35% by mass, based on the total mass of the premix composition. The dry content corresponds to the percentage of solids in the composition (here the premix).

Preferably, in premix composition according to the invention, the mass ratio of water to the sum of polysaccharide and clay is 10 to 100, preferably from 15 to 80, more preferably from 20 to 60.

Preferably, in premix composition according to the invention, the mass ratio of water to polysaccharide is at least 20, preferably at least 30, more preferably at least 40. For example, the mass ratio of water to polysaccharide may be from 20 to 120, preferably from 30 to 100, more preferably from 40 to 80.

Preferably, in premix composition according to the invention, the mass ratio of water to clay is at least 10, preferably at least 15, more preferably at least 20. For example, the mass ratio of water to clay may be from 20 to 120, preferably from 30 to 100, more preferably from 40 to 80.

Finishing compound:

A second object of the present invention relates to a finishing compound comprising the premix composition according to the invention and at least one filler, preferably an inert filler.

The filler may be a component as defined above.

The filler may have a particle size distribution per unit volume such that the D90 value is lower than 350 μm, preferably less than 250 μm. The particle size distribution can be determined by laser particle size analysis.

Preferably, the filler is selected from dolomite, calcium carbonate, expanded perlite, or a mixture thereof.

Preferably, the mass content of filler, preferably of inert filler, in the finishing compound is at least 50% by mass, preferably at least 60% by mass, based on the mass of said finishing compound. For example, the mass content of filler, preferably of inert filler, in the finishing compound may be from 50% to 90% by mass, preferably from 60% to 85% by mass, based on the total mass of the finishing compound.

The mass content of premix composition contained in the finishing compound may be from 5% to 30% by mass, preferably from 7% to 20% by mass, based on the total mass of the finishing compound.

The finishing compound may be provided in a wet form, in particular in a ready-to-use form, for example in a fluid, creamy or pasty form. In other word, it can be used with no or little addition of water. It may thus be used as ready-mixed drying-type finishing compound.

Preferably, the finishing compound according to the invention is free of calcium sulfate hemihydrate, preferably free of mineral binder. In this disclosure, a composition that is "free of" a component means a mass content of said component of less than 0.5%, preferably of less than 0.2% by mass, based on the total mass of said composition.

The finishing compound according to the invention may further comprise additional ingredients other than the additives optionally contained in the premix. Non-limiting examples of additional ingredients include pH modifiers (e.g. alkali hydroxides), pigments, organic additives, coalescent agents, rheology modifiers, dispersing agents, set accelerators, set retarders, setting-reaction indicators, coloring agents, etc. Additional ingredients, if present, may be used in amounts generally ranging from about 0.05% to about 1% by mass, based on the total mass of the finishing compound.

According to a particular embodiment, the finishing compound according to the invention may further be mixed, for example just before use, with a mineral binder (such as calcium sulfate hemihydrate), for example with a ready-mixed powder comprising a mineral binder. It allows to provide a finishing compound combining properties of setting-type and drying-type compounds.

According to another embodiment, the finishing compound according to the invention may be prepared by mixing, for example just before use, the premix composition according to the invention with a mineral binder (such as calcium sulfate hemihydrate), for example with a ready-mixed powder comprising a mineral binder. Then, the resulting finishing compound may be used directly as a setting-type finishing compound. Indeed, an advantage of the premix according to the invention is that fillers and mineral binders may be easily blended to said premix, for example directly on site.

The finishing compound according to the invention may advantageously be prepared by a method according to the invention as defined below.

Method for manufacturing a premix composition:

Another object of the present invention is a method for manufacturing a premix composition (P), said method comprising:

- providing at least one binder, preferably an organic binder, and mixing with optional additives to obtain a binder composition (A);
- preparing a pre-gel of clay (B) comprising water and clay;
- preparing a pre-gel (C) comprising water and a polysaccharide;
- mixing the pre-gel of clay (B) with the pre-gel (C) to obtain a mixture (BC); and
- mixing the binder composition (A) with the mixture (BC).

The resulting premix composition (P) may advantageously have one or more of the features as disclosed above.

In particular, in the method of manufacturing according to the invention, the mass ratio of clay to polysaccharide may be at least 0,9, preferably at least 1.

Preferably, the mass ratio of water to clay in the pre-gel of clay (B) is from 5 to 40, preferably from 8 to 30, more preferably from 10 to 25.

Preferably, the mass ratio of water to polysaccharide in the pre-gel (C) is from 10 to 50, preferably from 15 to 45, more preferably from 20 to 40.

Use of a premix composition:

Another object of the present invention relates to a use of a premix composition according to the invention for preparing a finishing compound.

Indeed, the premix composition according to the invention is applicable for the preparation of a wide variety of finishing compounds, including compositions for application by spatula, by roller or using an aerosol. Moreover, depending on the fillers used for the preparation, the premix composition may be used for the preparation of a drying-type finishing compound, a setting-type finishing compound or of a finishing compound combining the advantages of a ready mixed compound (e.g., mixed with inert fillers) with setting actions (e.g., with the addition, on site, of supplemental mineral binders, such as calcium sulfate hemihydrate, that react with water). Moreover, depending on the fillers (and their content) used for the preparation, the premix composition may be used for the preparation of a light, semi-light and heavy finishing compounds, for example to meet different purposes such as filler coating, smoothing coating or decorative coating. Thus, the premix composition according to the invention may be a all-in-one product for the preparation of finishing compounds.

Furthermore, the premix composition has the advantage to be stable enough to be stored for several months before being used for the preparation of finishing compounds.

Method for preparing a finishing compound:

Another object of the present invention relates to a method for preparing a finishing compound, said method comprising:

- providing a premix composition (P) according to the invention;
- mixing said premix (P) with added water to obtain a diluted premix (E); and
- adding at least one filler, preferably inert, to the diluted premix (E) and mixing to obtain the finishing compound (J).

The resulting finishing compound (J) may advantageously have one or more of the features as disclosed above.

Preferably, in the method for preparing according to the invention, the mass ratio of added water to the premix is 0.5 to 5, preferably 1 to 3.

Preferably, in the method for preparing according to the invention, the mass content of filler is at least 50%, preferably at least 55%, more preferably at least 60%, by mass relative to the mass of the finishing compound.

Many different aspects and embodiments are possible. Some of those aspects and embodiments may be illustrated for better understanding by referencing the accompanying drawings, which do not limit the scope of the present invention.

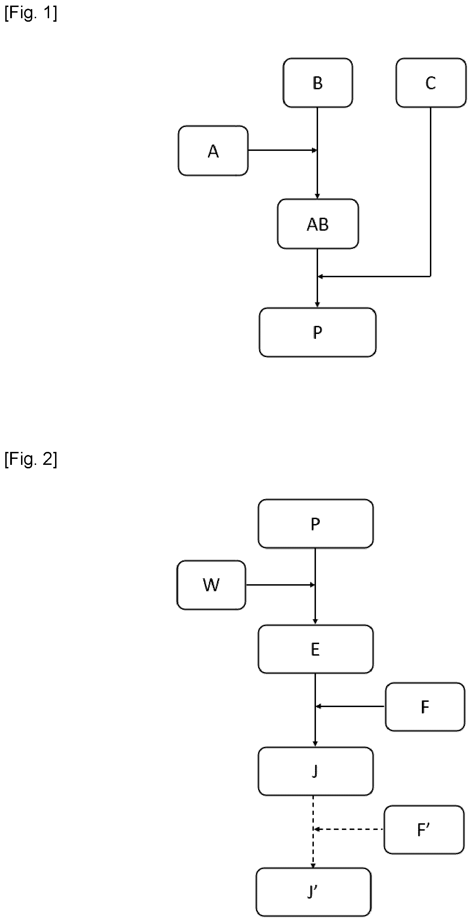

To illustrate an embodiment of the method according to the invention for manufacturing a premix composition, reference is made to FIG. 1, which shows a schematic view of a method according to the invention for manufacturing a premix composition, where a composition (A) comprising at least one binder is provided. Preferably, the composition (A) also comprises additives that are previously mixed with the one or more binder(s). A pre-gel (B) of clay is prepared by mixing water with at least one clay. Then the pre-gel (B) is blended with a composition (A) to obtain a mixture (AB). A pre-gel (C) of polysaccharide is prepared by mixing water with at least one polysaccharide. Then the pre-gel (C) is blended with the mixture (AB) and homogenized to obtain a premix composition (P) having a gel-like appearance.

FIG. 2 represents a schematic view of a method for preparing a finishing compound from a premix composition according to the invention, where the premix composition (P) is first added with additional water (W) to get a diluted premix (E). Then, the diluted premix (E) is blended with at least one filler (F) and the mixture is homogenized to obtain a finishing compound (J). In one embodiment (also illustrated in FIG. 2), the finishing compound (J) may further be blended with a predetermined quantity of at least one mineral binder (F') (such as calcium sulfate hemihydrate) so as to obtain a finishing compound (J'). Thus, the obtained finishing compound (J') exhibits setting actions. Such a finishing compound (J') may be prepared on the working site for an immediate application.

## Examples

The invention is illustrated in more detail by the non-limiting examples below. In the absence of any indication to the contrary, the percentages indicated are percentages by mass.

Examples of premix compositions according to the invention "P1" to "P3" are presented in the Table 1 below and prepared from the listed raw materials. These premix compositions are prepared according to the method for manufacturing described below with the proportions for the composition "A", the pre-gel "B" and the pre-gel "C" as indicated in Table 1 (in % by mass). These compositions are also evaluated in terms of rheological properties (viscosity) and stability over time. The corresponding results are listed in Table 2.

Table 1:

| p | Chemical name | Type | P1 (in %) | P2 (in %) | P3 (in %) |
|---|---|---|---|---|---|
| A | Vinyl Acetate Ethylene (in 60% solution in water, by mass) | binder | 27 | 45 | 9 |
| | Polyacrylate sodium salt (in 42% solution in water, by mass) | dispersant | 0.5 | 0.4 | 0.6 |
| | 1,2-Benzisothiazolin-3-one | preservative | 0.7 | 0.7 | 0.7 |
| | Isothiazolinones (CMIT/MIT) | preservative | 0.3 | 0.3 | 0.4 |
| | Organic ether (Fatty acids, tall-oil, ethoxylated, propoxylated) (99-100% by mass) | defoamer | 0.6 | 0.5 | 0.8 |
| | Acrylic copolymer (dispersion in 30% solution in water, by mass) | dispersant | 3.5 | 2.7 | 4.3 |
| | PEG-20 Cetostearyl Ether (in 50% by mass) | dispersant | 1.4 | 1.3 | 1.4 |
| B | Water | solvent | 31.1 | 22.2 | 39.9 |
| | Activated, natural phyllosilicate (100%) | clay | 1.9 | 1.9 | 1.9 |
| C | Water | solvent | 32 | 24 | 40 |
| | Methyl ethyl hydroxyethyl cellulose (100%) | thickener | 1 | 1 | 1.1 |
| | **Total (% by mass)** | | **100** | **100** | **100** |

In the Table above, the left-hand column entitled "p" indicates the phases in which the ingredients are blended.

The premix compositions "P1" to "P3" are prepared as follows:

- a mixture (or phase) "A" is prepared by mixing the corresponding ingredients (binder and additives) at room temperature until homogenized, for example using a Rayneri stirring equipped with a rotor-stator at 1000 rpm (rotations per minute);

- a pre-gel "B" is prepared by mixing the corresponding ingredients (water and polysaccharide) at room temperature, until a gel is formed (around x minutes at around X rpm);

- a pre-gel "C" is prepared by mixing the corresponding ingredients (water and clay) at room temperature, until a gel is formed (around x minutes at around X rpm);

- the pre-gel "B" is added to the pre-gel "C", and the whole ("BC") is mixed until homogenized (around x minutes at around X rpm)

- the mixture "A" is added to the pre-gels "B" and mixed until homogenized, such as to get the premix.

A white premix composition is obtained, with a consistent, homogeneous and gel-like appearance.

These compositions are also evaluated in terms of rheological properties (viscosity) and stability over time. The corresponding results are listed in Table 2 below.

Table 2:

| Properties | P1 | P2 | P3 |
|---|---|---|---|
| Viscosity (cP) | 93 700 | 115 000 | 69 000 |
| pH | 6.1 | 6.03 | 6.23 |
| Dry content (%) | 26.13 | 30.12 | 10.72 |
| Density | 1.00 | 1.03 | 1.03 |
| Stability (3 months at 20°C) | Yes | Yes | Yes |

The stability of each premix composition is evaluated by measuring overall properties of the samples (viscosity, density, pH, dry content) before and after storage under room temperature (about 20°C) during three months, where the properties after storage are compared with those obtained immediately after manufacture of the premix compositions. The stability results show that the three premix compositions "P1" to "P3" are very stable and their texture remains consistent and homogeneous over time.

The premix compositions "P1" to "P3" according to the invention may all be used for preparing finishing compounds, and in particular joint compounds that are light, semi-light or heavy. Such joint compounds may be used for applications as varied as spatula, roller or aerosol.

Joint compounds:

In the examples given in Table 3 below, the premix compositions "P1" to "P3" are respectively used for preparing a light joint composition "J1", a semi-light joint composition "J2" and a heavy joint composition "J3" according to the invention. These compositions are prepared according to the method for preparing the finishing compounds as described below with the proportions for the premix composition "P", the added water and the fillers as indicated in Table 3 below (in % by mass).

Table 3:

| Compositions : | | J1 (in %) | J2 (in %) | J3 (in %) |
|---|---|---|---|---|
| Premix composition P1 | Premix | 11.7 | - | - |
| Premix composition P2 | Premix | - | 10.8 | - |
| Premix composition P3 | Premix | - | - | 10 |
| Water | | 21.8 | 22.1 | 14.8 |

(continued)

| Compositions : | | J1 (in %) | J2 (in %) | J3 (in %) |
|---|---|---|---|---|
| dolomite | filler | 56 | 62.7 | 75 |
| Expanded perlite | filler | 10.4 | 4.3 | - |
| NaOH | pH modifier | 0.1 | 0.1 | 0.2 |
| **Total (in % by mass)** | | **100** | **100** | **100** |

The obtained finishing compounds are in the form of a homogeneous paste (wet form). They may be used as joint compounds of the drying-type, in a ready-to-use form.

These compositions are also evaluated in terms of rheological properties (viscosity) and of performances (in particular regarding the drying time and shrinkage rate) using the methods detailed below. The corresponding results are listed in Table 4 and compared to known reference products available on the market (respectively a light joint compound "R1", a semi-light joint compound "R2" and a heavy joint compound "R3" not according to the invention).

Table 4:

| Properties | J1 (light) | J2 (semi-light) | J3 (heavy) | R1 (light) | R2 (semi-light) | R3 (heavy) |
|---|---|---|---|---|---|---|
| Penetration depth after 7 days (in 1/10 mm) | n.d. | 313 | 299 | n.d. | n.d. | n.d. |
| PVC (in %) | 94.7 | 90.3 | 96.7 | 88.2 | 85.4 | 92.5 |
| Shrinkage (in %) | 6.7 | 9.1 | 15.4 | 13.5 | 20.3 | 20.0 |
| Drying time (in %) | n.d. | 3h52min | 3h58min | 7h24min | 7h28min | 6h12min |
| Solid Dry content (in %) | 65.74 | 73.13 | 75.57 | n.d. | n.d. | n.d. |

The results show that the joint compounds according to the invention have significantly reduced drying time compared to reference known products R1 to R3 (more than 30% faster). Furthermore, the joint compounds according to the invention show significantly reduced shrinkage compared to the references (reduction of the shrinkage of more than 20% for the heavy compound, and of more than 50% for the light and semi-light compounds).

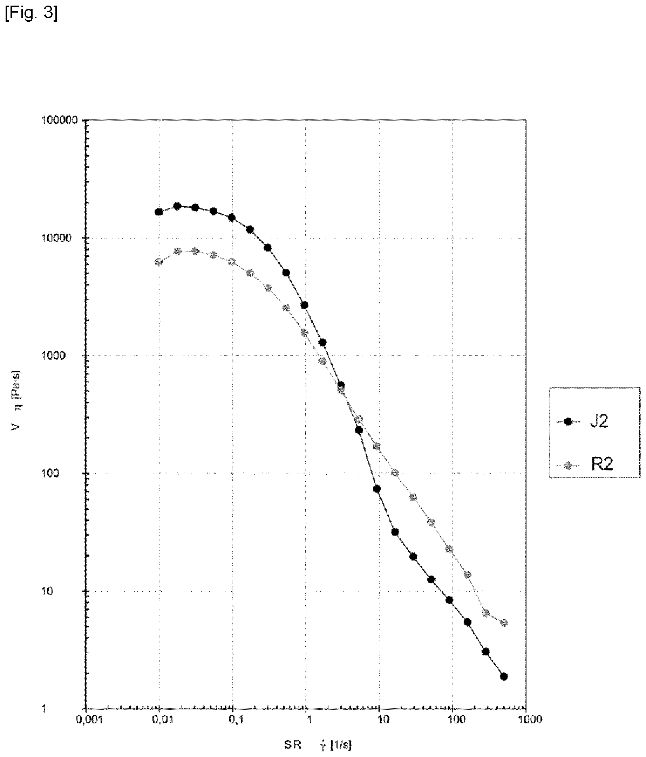

The viscosity curves have also been determined for the joint compound "J2" and compared to the one of the reference product "R2". The curves are represented in Fig. 3 (viscosity "V" in Pa.s, as a function of the shear rate "SR" in $s^{-1}$). Fig. 3 shows that the joint compound J2 according to the invention is significantly more shear-thinning in comparison to the reference product R2. J2 exhibits higher viscosity at low shear rates, allowing lower filler sedimentation during storage and less sag of applied compound. It also presents lower viscosity at shear rates representative of the application (higher than 10 $s^{-1}$), resulting in easier application and improved workability.

Smoothing plaster:

The premix composition "P1" is also used to prepare a smoothing plaster "S1" with the percentages given in Table 5 below (in % by mass).

Table 5:

| Compositions : | | S1 (in %) |
|---|---|---|
| Premix composition P1 | Premix | 10 |
| Water | | 14.1 |
| Dolomite | filler | 75.8 |
| NaOH | pH modifier | 0.1 |
| **Total (in % by mass)** | | **100** |

The smoothing plaster "S1" according to the invention shows good performances and quality, in particular in terms of ease of handling, workability, reduced shrinkage, drying time and sanding.

Evaluation methods:

The viscosity of the compositions is measured after 24 hours of storage of the composition in an oven at 20°C, using the Brookfield viscometer previously mentioned, with spindle no. 7 at a speed of 12 rpm (rotations per minute). The measurements are expressed in cP (centipoise or Pa.s).

The penetration depth is used to measure the consistency and/or plasticity of the compositions (pasty, semi-solid or highly viscous samples). It is determined here by penetrometry using a K19500 penetrometer (from LABOMAT) equipped with a 102.5 g tared penetration cone (reference K20000 Brass cone) according to the method recommended by the manufacturer (ASTM D217). Here, the penetration depth of each composition is measured 7 days after preparation. When the measurement is started, the cone freely falls into the sample, under the action of its own weight. The depth of penetration is recorded and expressed in 1/10 mm. The deeper the penetration mobile sinks, the less consistent the composition. The resulting penetration depth values are listed in Table 4.

The dry content is measured using the analyser Precisa XM 60 (based on the thermogravimetric principle). A small sample (1-2 g) is placed in the analyzer, where it is heated to evaporate moisture. The analyzer continuously measures the sample's weight during heating and calculates the moisture content and the solid content based on the initial and final weights. The results are given in % by mass, based on the total mass of the composition (premix composition or finishing compound), i.e. of the composition at the initial state (before evaporation of the moisture).

Shrinkage is measured on plasterboard samples using a laser scanner. A circular metallic profile (3 mm depth, 45 mm diameter) is placed on the plasterboard to define measurement points (points marked as "A, B and C" for respectively the top, the middle, and the bottom of each sample). The laser measures the surface inside the profile: when it is completely empty, just after the finishing compound is applied, and again after 24 hours of drying of the finishing compound. The measurements are repeated twice for each sample. The shrinkage is calculated from these measurements and corresponds to the average of the two measurements (in %).

The drying time is measured using The Erichsen Drying Time Recorder Model 504-V, which is designed to automatically determine and record the drying behavior of paints and similar coatings, according to the method recommended by the manufacturer, and under controlled climatic conditions (here at 20°C and 28,4% Relative Humidity). The method consists in applying the composition to be tested ("coating") on six glass plates (each measuring $305 \times 25$ mm), with a thickness of 1.5 mm. Then, the device uses six hemispherically ended needles that slide over the coating at a defined speed (here during a total running time of 9 hours). As the needles move, they create tracks on the coating. The nature of these tracks varies depending on the degree of dryness of the coating ("drying stages" identified by the characteristics of the tracks):

- No track: The coating material flows together behind the needle,
- Continuous track: No flow of coating material,
- Rhombic track: Incipient surface dryness,
- Continuous track on the surface: Incipient through-dryness,
- Interrupted track: Incipient non-stickiness,
- No track: Incipient handling fastness.

The time at which each transitional point occurs is recorded, allowing for precise determination of the drying time. The coating is considered dry when the line (or "track") ends.

The Pigment Volume Concentration (or "PVC") is a measure generally used for paint compositions (measure of the volume of pigment relative to the total volume of both pigment and binder in a paint or coating). It is an important parameter that affects the properties of the paint, such as gloss, durability, and permeability. The PVC is calculated using the equation below:

$$\mathrm{PVC} = \frac{Vp+Vf}{Vp+Vf+Vb} \cdot 100$$

wherein Vp is the total volume of all pigments in the composition; Vf is the total volume of all fillers in the composition and Vb is the volume of the non-volatile part (i.e. solid dry content) of the binder in the composition.

**Claims**

**1.**  A premix composition, for preparation of finishing compound, comprising:

- a binder,
- optional additives,
- a polysaccharide,
- a clay, and
- water,

wherein the premix composition has a mass ratio of clay to polysaccharide of at least 0.9, preferably at least 1, more preferably at least 1.2, even more preferably at least 1.5.

2. A premix composition according to claim 1, wherein the premix composition is a gel-like composition.

3. A premix composition according to any of the preceding claims, comprising more than 4% by mass of binder, based on the mass of the premix composition.

4. A premix composition according to any of the preceding claims, comprising at most 10% by mass of polysaccharide, preferably at most 8%, more preferably at most 5%.

5. A premix composition according to any of the preceding claims, wherein the polysaccharide is selected from cellulose ether.

6. A premix composition according to any of the preceding claims, wherein the clay is selected from activated clays, preferably activated by cation exchange.

7. A premix composition according to any of the preceding claims, comprising at most 5% by mass of clay, preferably at most 4%, more preferably at most 3%.

8. A premix composition according to any of the preceding claims, having a viscosity of 50 000 to 150 000 cP, preferably 80 000 to 110 000 cP.

9. A premix composition according to any of the preceding claims, having a pH of from 5 to 7, preferably of from 5.5 to 6.5.

10. A premix composition according to any of the preceding claims, having a dry content from 8% to 40%, preferably from 10% to 35%.

11. A finishing compound comprising the premix composition according to any of claims 1 to 10 and at least one filler.

12. A finishing compound according claims 11, wherein the filler is selected from dolomite, calcium carbonate, expanded perlite, or a mixture thereof.

13. A finishing compound according to any of claims 11 to 12, comprising from 50% to 90% by mass of filler, preferably from 60% to 85% by mass, compared to the mass of the finishing compound.

14. A method for manufacturing a premix composition (P), said method comprising:

   - providing at least one binder and mixing with optional additives to obtain a binder composition (A);
   - preparing a pre-gel of clay (B) comprising water and clay;
   - preparing a pre-gel (C) comprising water and polysaccharide;
   - mixing the pre-gel of clay (B) with the pre-gel (C) to obtain a mixture (BC); and
   - mixing the binder composition (A) with the mixture (BC).

15. Use of a premix composition according to any of claims 1 to 10 for preparing a finishing compound.

16. Method for preparing a finishing compound, said method comprising:

   - providing a premix composition (P) according to the invention;
   - mixing said premix (P) with added water to obtain a diluted premix (E); and
   - adding at least one filler to the diluted premix (E) and mixing to obtain the finishing compound (J).

**17.** A method according to claim 16, wherein the mass ratio of added water to the premix is 0,5 to 5, preferably 1 to 3.

[Fig. 1]

[Fig. 2]

[Fig. 3]

**Europäisches Patentamt**
**European Patent Office**
**Office européen des brevets**

# EUROPEAN SEARCH REPORT

**Application Number**

EP 25 15 5350

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 2005/028585 A1 (HERCULES INC [US]; PODLAS THOMAS J [US]) 31 March 2005 (2005-03-31) * claims 1, 15, 17-22,25-28,38 * * table 1 * * page 11, line 10 - line 16 * ----- | 1,2,4,5, 7,11-13, 15 | INV. C04B14/10 C04B26/04 C04B14/26 C04B14/28 C04B24/38 |
| X | EP 0 681 998 B1 (UNITED STATES GYPSUM CO [US]) 10 June 1998 (1998-06-10) * example 1 * * page 4, line 9 - line 10 * * page 5, line 37 - line 38 * * page 10, line 10 - line 11 * ----- | 1-5,7,9, 11-13,15 | ADD. C04B103/67 |
| X | EP 3 307 688 B1 (UNITED STATES GYPSUM CO [US]) 5 August 2020 (2020-08-05) * claim 1 * * paragraph [0075] * * example Formulation 3A; table 6 * ----- | 1-7, 11-13,15 | |

**TECHNICAL FIELDS SEARCHED (IPC)**

C04B

The present search report has been drawn up for all claims

| Place of search | Date of completion of the search | Examiner |
|---|---|---|
| The Hague | 11 July 2025 | Zammit, Madalena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EP 4 786 436 A1

## ANNEX TO THE EUROPEAN SEARCH REPORT
## ON EUROPEAN PATENT APPLICATION NO.

EP 25 15 5350

This annex lists the patent family members relating to the patent documents cited in the above-mentioned European search report.
The members are as contained in the European Patent Office EDP file on
The European Patent Office is in no way liable for these particulars which are merely given for the purpose of information.

11-07-2025

| Patent document cited in search report | | Publication date | Patent family member(s) | | Publication date |
|---|---|---|---|---|---|
| WO 2005028585 | A1 | 31-03-2005 | BR | PI0414413 A | 14-11-2006 |
| | | | CA | 2538892 A1 | 31-03-2005 |
| | | | CN | 1852962 A | 25-10-2006 |
| | | | EP | 1664233 A1 | 07-06-2006 |
| | | | JP | 2007505974 A | 15-03-2007 |
| | | | KR | 20060080195 A | 07-07-2006 |
| | | | MX | PA06002923 A | 14-06-2006 |
| | | | RU | 2348669 C2 | 10-03-2009 |
| | | | TW | 200610795 A | 01-04-2006 |
| | | | US | 2005056187 A1 | 17-03-2005 |
| | | | WO | 2005028585 A1 | 31-03-2005 |
| EP 0681998 | B1 | 10-06-1998 | AT | E167174 T1 | 15-06-1998 |
| | | | AU | 692805 B2 | 18-06-1998 |
| | | | BR | 9507713 A | 23-09-1997 |
| | | | CA | 2139373 A1 | 13-11-1995 |
| | | | CN | 1155878 A | 30-07-1997 |
| | | | CZ | 294162 B6 | 13-10-2004 |
| | | | DE | 69502879 T2 | 04-03-1999 |
| | | | DK | 53495 A | 13-11-1995 |
| | | | DK | 0681998 T3 | 22-03-1999 |
| | | | EG | 20598 A | 30-09-1999 |
| | | | EP | 0681998 A1 | 15-11-1995 |
| | | | ES | 2112159 A1 | 16-03-1998 |
| | | | ES | 2120128 T3 | 16-10-1998 |
| | | | HK | 1002190 A1 | 07-08-1998 |
| | | | IL | 113582 A | 20-06-1999 |
| | | | JP | 4070825 B2 | 02-04-2008 |
| | | | JP | H0860139 A | 05-03-1996 |
| | | | KR | 970702829 A | 10-06-1997 |
| | | | MY | 115955 A | 31-10-2003 |
| | | | NO | 320770 B1 | 23-01-2006 |
| | | | NZ | 270311 A | 25-09-1996 |
| | | | PL | 317209 A1 | 17-03-1997 |
| | | | RO | 117448 B1 | 29-03-2002 |
| | | | SA | 96160631 B1 | 07-10-2006 |
| | | | SK | 145596 A3 | 06-08-1997 |
| | | | TR | 28456 A | 04-07-1996 |
| | | | TW | 314504 B | 01-09-1997 |
| | | | US | 5746822 A | 05-05-1998 |
| | | | WO | 9531415 A1 | 23-11-1995 |
| EP 3307688 | B1 | 05-08-2020 | AU | 2016276159 A1 | 18-01-2018 |
| | | | BR | 112017024874 A2 | 14-08-2018 |
| | | | CA | 2987958 A1 | 15-12-2016 |
| | | | CN | 107683270 A | 09-02-2018 |

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 25 15 5350

This annex lists the patent family members relating to the patent documents cited in the above-mentioned European search report.
The members are as contained in the European Patent Office EDP file on
The European Patent Office is in no way liable for these particulars which are merely given for the purpose of information.

11-07-2025

| Patent document cited in search report | Publication date | Patent family member(s) | Publication date |
|---|---|---|---|
| | | CO 2017013425 A2 | 20-03-2018 |
| | | EP 3307688 A1 | 18-04-2018 |
| | | JP 6714617 B2 | 24-06-2020 |
| | | JP 2018526467 A | 13-09-2018 |
| | | KR 20180018582 A | 21-02-2018 |
| | | LT 3307688 T | 25-09-2020 |
| | | MX 390811 B | 21-03-2025 |
| | | MY 183694 A | 08-03-2021 |
| | | PE 20180110 A1 | 18-01-2018 |
| | | PL 3307688 T3 | 16-11-2020 |
| | | RU 2017144891 A | 20-06-2019 |
| | | UA 121674 C2 | 10-07-2020 |
| | | WO 2016200677 A1 | 15-12-2016 |

EPO FORM P0459

For more details about this annex : see Official Journal of the European Patent Office, No. 12/82

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005028585 A
- WO 2002094734 A